# EUROPÄISCHE PATENTSCHRIFT

(11) **EP 0 943 490 B1**
(45) Veröffentlichungstag und Bekanntmachung des Hinweises auf die Patenterteilung: **08.12.2004**
(21) Anmeldenummer: 98105000.8
(22) Anmeldetag: 19.03.1998
(51) Int. Cl.: B60N 3/00, B60N 2/42

(54) **Fahrzeugsitz**
Vehicle seat
Siège de véhicule

(43) Veröffentlichungstag der Anmeldung: 22.09.1999
(73) Patentinhaber: Volkswagen Aktiengesellschaft, 38436 Wolfsburg (DE)
(72) Erfinder: Sinnhuber, Ruprecht, Dipl.-Ing., 38518 Gifhorn (DE); Bosse Vogel, Tim, Dipl.-Ing., 89077 Ulm (DE); Wohllebe, Thomas Dipl.-Ing., D-38110 Braunschweig (DE)
(74) Vertreter: Schneider, Henry, Dipl.-Ing.

(56) Entgegenhaltungen:
- WO-A-95/11818
- WO-A-97/43142
- DE-A- 4 230 670
- DE-A- 4 238 549
- DE-A- 4 421 946
- DE-U- 9 103 611
- DE-U- 9 215 254
- GB-A- 2 300 391
- US-A- 5 669 661

## Beschreibung

Die Erfindung betrifft einen Fahrzeugsitz gemäß dem Oberbegriff des Patentanspruchs 1.

In den Schriften DE-44 21 946-A1 und WO 95/11 818 (beide B 60 N 2/42) wird detailliert beschrieben, welchen Gefährdungen Fahrzeuginsassen bei einem Heckaufprall ausgesetzt sind. Auf die in der jeweiligen Beschreibungseinleitung dargestellten Zusammenhänge wird hier ausdrücklich Bezug genommen.

Zur Herabsetzung der Verletzungsgefahr wird in der DE-44 21 946-A1 die die Merkmale des Oberbegriffs der Ansprüche 1 und 19 enthält, vorgeschlagen, daß innerhalb eines Lehnenrahmengestells verlaufende Querverbindungen energieabsorbierend in ihrer Längsrichtung deformierbar sind. Durch diese Maßnahme soll der Insasse in die Lage versetzt werden, bei einem Heckaufprall um einen vorgegebenen Betrag in die Rükkenlehne eintauchen zu können. Nachteilig ist hierbei jedoch, daß die Eintauchbewegung auf den Beckenbereich beschränkt ist. Der Schulterbereich des Fahrzeuginsassen hat keine vergleichbaren Ausweichmöglichkeiten. Diesbezüglich günstiger anzusehen ist die in der WO 95/11 818 beschriebene Lösung. Dort sind als Sollbruchelemte ausgebildete Querstreifen angeordnet, die bei Überschreitung einer vorgegebenen Kraft brechen und eine elastische Verlagerung einer Polsterfederung nach hinten ermöglichen. Der Fahrzeuginsasse kann somit also sowohl im Beckenbereich als auch im Schulterbereich in Richtung Rückenlehne eintauchen. Außerdem wird in dieser Schrift ein Trägerelement zur Halterung der Polsterfederung beschrieben, daß gegenüber dem Rückenlehnenrahmen in Abhängigkeit von Signalen eines Crashsensors um eine in Beckenhöhe verlaufende Achse verschwenkbar ist, um so durch Rückwärtsverlagerung des Fahrzeuginsassen dessen Kopf an die Kopfstütze heranzuführen. Durch die schlagartige Freigabe des Trägerelementes ist aber auch bei dieser Einrichtung mit einer erhöhten Schlagbelastung im Schulterbreich des Fahrzeuginsassen zu rechnen.

Die DE 42 38 549 beschreibt einen Rückenlehnenrahmen mit Lehnenseitenteilen, die energieabsorbierend ausgeführt sind. Schutzmaßnahmen für den Schulter- und/oder Beckenbereich werden nicht beschrieben.

Die G 91 03 611.9 zeigt eine Sitzanordnung mit einem Sitzträger, der über eine Federlagerung schwimmend in einem Sitzgestell gelagert ist. Die schwimmende Lagerung ist so abgestimmt, daß für den normalen Fahrbetrieb der Fahrer unter höchst unterschiedlichen Geländebedingungen komfortabel untergebracht ist.

Die G 92 15 254 zeigt ein Sitzgestell, bei dem die Standfüße energieabsorbierend ausgeführt sind. Im Belastungsfall kippt der Sitz nach vorn.

Von diesem Hintergrund liegt der Erfindung die Aufgabe zugrunde, gattungsgemäße Fahrzeugsitze so weiterzubilden, daß das von ihnen ausgehende Verletzungsrisiko bei Heckaufprallunfällen weiter herabgesetzt werden kann.

Diese Aufgabe wird gelöst mit einem Fahrzeugsitz gemäß den Merkmalen der Patentansprüche 1 und 19. Die Unteransprüche betreffen besonders zweckmäßige Weiterbildungen der Erfindung.

Erfindungsgemäß wird also die aus einem Grundgestell und einem Zusatzgestell zusammengesetzte Gestellanordnung so ausgeführt, daß das Zusatzgestell über eine Energieabsorptionseinrichtung an dem Grundgestell abgestützt ist. Durch diese Maßnahme wird erreicht, daß beispielsweise bei Anwendung der Erfindung auf eine Rückenlehne der Beckenund Oberkörperbereich des Fahrzeuginsassen auf der gesamten Anlagefläche Verlagerungen vornehmen kann. An dieser Stelle wird ausdrücklich darauf hingewiesen, daß der Einsatz der Erfindung nicht auf Rückenlehnen beschränkt ist, sondern auch in Sitzteilen Verwendung finden kann, um so beispielsweise bei einem Rollover die Stauchbelastung der Wirbelsäule auf ein vorgegebenes Maß beschränken zu können.

Besondere Aufmerksamkeit verdienen Weiterbildungen der Erfindung, die darauf abstellen, insassenspezifische Kraft-Weg-Kennungen der Energieabsorptionseinrichtung zu ermöglichen. So kann die Energieabsorptionseinrichtung beispielsweise in der Weise ausgebildet sein, daß für schwerere Fahrzeuginsassen eine härtere Kraft- Weg-Kennung einstellbar ist als für leichtere Insassen. Darüber hinaus kann auch das Energieabsorptionsvermögen an verschiedenen Stellen der Gestellanordnung unterschiedlich stark ausgelegt sein, um so dem Oberkörper des Fahrzeuginsassen nach einem Heckaufprall eine wünschenswerte Drehbewegung auferlegen zu können. Diese Drehbewegung kann beispielsweise dahingehend optimiert werden, daß zusammen mit der auf der Rückenlehne befindlichen Kopfstütze insgesamt ein ergonomisch günstiges Anlageprofil für den Insassen erreicht wird.

Besonders leichtbauende und einfach zu montierende Gestellanordnungen erhält man dann, wenn gemäß Anspruch 4 Energieabsorptionselemente bereits materialeinheitlich an dem Grundgestell und/oder an dem Zusatzgestell angeformt sind. Dies ist insbesondere auch dann der Fall, wenn beispielsweise das Zusatzgestell nach Art eines Schalenkörpers für den Rücken und/oder das Gesäß samt Oberschenkel ausgebildet ist. Im übertragenen Sinne kann so von einer "schwimmenden Lagerung" des Zusatzgestells in dem Grundgestell gesprochen werden. Dabei bezieht sich die "Schwimmfähigkeit" des Zusatzgestells nur auf solche Belastungen, die während eines Fahrzeugunfalles auf die Gestellanordnung ausgeübt werden. Abweichend von der in der G 9 103 611.9 gezeigten Anordnung ist die Auslegung der Energieabsorptionseinrichtung ist demnach so, daß sich im normalen Sitzbetrieb aufgrund der von den Insassen ausgeübten Gewichtskräfte keine spürbaren Relativbewegungen zwischen Zusatzgestell und Grundgestell ergeben. Bei der Verwendung von Schalenkörpern aus Hartschaumwerkstoffen (beispielsweise Polypropylen-Partikelschaum oder Aluminiumschaum) kann je nach Auslegung die Energieabsorptionsfunktion in den Werkstoff des Schalenkörpers teilweise oder ganz hineinverlegt worden sein.

Ein Vorteil der erfindungsgemäßen Lösung ist darin zu sehen, daß sie in ihrer räumlichen Ausdehnung keinen zusätzlichen Bauraum beansprucht und so ohne Komforteinbußen in den heute auf dem Markt befindlichen Fahrzeugen einsetzbar ist. Es können darüber hinaus bereits vorhandene Gestellrahmen genutzt werden, die lediglich zur Aufnahme des Zusatzgestells konstruktiv angepasst werden müssen.

Als bevorzugter Anwendungsfall sind sogenannte Gurtintegralsitze anzusehen. Deren Grundgestell muß im Rückhaltefall die Gurtkräfte aufnehmen und ist deshalb besonders steif ausgeführt. Derart massive Rahmen sind für den Insassen bei Heckaufprallunfällen besonders kritisch und daher bevorzugt mit einem energieabsorbierende Zusatzgestell zu versehen.

Vorteilhafte Ausführungsbeispiele der Erfindung sind in der Zeichnung dargestellt. Es zeigt
- Figur 1:: einen erfindungsgemäßen Fahrzeugsitz in einer Seitenansicht,
- Figur 2:: in ausschnittsweiser Darstellung eine Modifikation des Fahrzeugsitzes gemäß Figur 1,
- Figur 3:: ein weiteres Ausführungsbeispiel für einen erfindungsgemäßen Sitz,
- Figur 4:: eine Ansicht gemäß Schnitt IV-IV in Figur 3,
- Figur 5:: die Anordnung von Energieabsorptionselementen innerhalb einer Rückenlehne in einer Seitenansicht,
- Figur 6:: eine Vorderansicht zu der in Figur 5 dargestellten Rückenlehne,
- Figur 7:: ein Energieabsorptionselement in Schnittdarstellung in einer Draufsicht,
- Figur 8:: in einer idealisierten Darstellung eine beispielhaft ausgewählte Kraft-Weg-Kennung für eines der Energieabsorptionselemente,
- Figur 9:: bei einem Heckaufprall auf die Gestellanordnung des Sitzes wirkende Kräfte,
- Figur 10:: in einer schematisierten Blockdarstellung einen erfindungsgemäßen Fahrzeugsitz mit insassenspezifischer Einstellbarkeit der Energieabsorptionsverhältnisse.

In allen Figuren weisen gleiche Bauteile die gleiche Bezifferung auf.

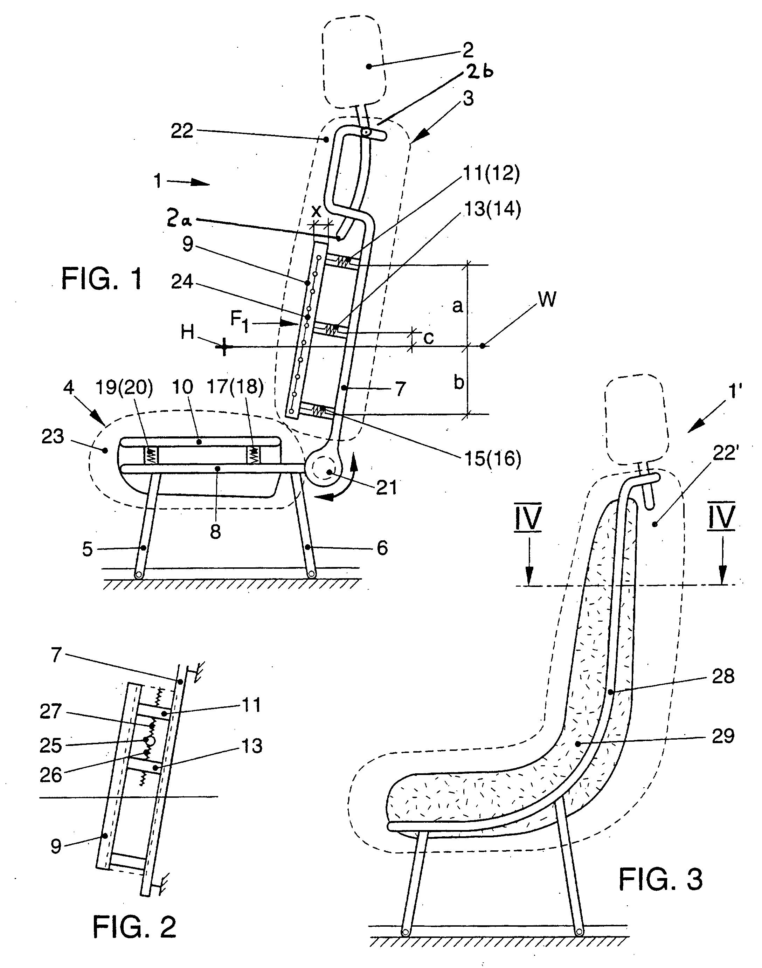

Figur 1 zeigt einen insgesamt mit 1 bezeichneten Fahrzeugsitz, der in an sich bekannter Weise eine Kopfstütze 2, ein Lehnenteil 3, ein Sitzteil 4 sowie in Bodenschienen bewegbare und in diesen mit dem Fahrzeugaufbau arretierbare Füße 5 und 6. Die Gestellanordnung des Fahrzeugsitzes 1 umfasst für das Lehnenteil 3 bzw. das Sitzteil 4 Grundgestelle 7 bzw. 8, an denen Zusatzgestelle 9 bzw. 10 über Energieabsorptionselemente 11 bis 20 abgestützt sind. Die in dieser Ansicht nicht erkennbaren und durch plastische Verformung wirksamen Energieabsorptionselemente sind mit einer in Klammern gesetzten Bezifferung versehen. Über einen Drehbeschlag 21 kann zur Neigungsverstellung des Lehnenteils 3 das Grundgestell 7 gegenüber dem Grundgestell 8 verschwenkt werden.

Mit H ist hier der sogenannte Hüftpunkt bezeichnet, der als Bezugspunkt für die Konstruktion von Fahrzeugsitzen maßgebend ist. Zugrundegelegt wird dabei der Hüftpunkt eines sogenannten 95 %-Mannes. Für die Auslegung des erfindungsgemäßen Fahrzeugsitzes 1 kann die Lage der Energieabsorptionselemente 11 bis 16 mit Bezug auf diesen Hüftpunkt definiert werden. Die Mitten der Energieabsorptionselemente 11 bis 16 weisen zu einer waagerechten W, die durch den Hüftpunkt H verläuft, Abstände auf, die hier mit den Buchstaben a, b und c bezeichnet werden.

Die gesamte vorbeschriebene Anordnung ist unter einem Lehnenpolster 22 und einem Sitzpolster 23 verborgen, die hier mit Strichlinien angedeutet sind. Innnerhalb des Zusatzgestells 9 ist noch eine an sich bekannte Polsterfederung 24 vorgesehen.

Beispielsweise bei einem Heckaufprall wird das Zusatzgestell 9 gegen den hier nicht weiter dargestellten Fahrzeuginsassen bewegt und erfährt so eine mit F₁ bezeichnete Aufprallkraft. Die Energieabsorptionselemente 11 bis 16 sind nun so ausgelegt, daß sich das Zusatzgestell 9 gegenüber dem Grundgestell 7 um einen vorgegebenen Betrag x verlagern kann. Den Energieabsorptionselementen ist dabei gleichzeitig eine Kraftbegrenzerfunktion zugewiesen, so daß die auf den Insassen ausgeübte Reaktionskraft ein nach bestimmten Crashszenarien vorzugebendes Höchstmaß nicht überschreiten kann. Die Verlagerung des Zusatzgestells 9 gegen das Grundgestell 7 führt darüber hinaus dazu, daß der Kopf des Insassen näher an die Kopfstütze 2 geführt werden kann. Wichtig in diesem Zusammenhang ist eine großflächige Aufnahme der Aufprallkraft F₁, um so beispielsweise die Baugröße der Energieabsorptionselemente in Grenzen halten zu können und andererseits auch Spitzenbelastungen des Insassenkörpers durch lokal aufschlagende Sitzteile herabsetzen zu können. Zu diesem Zweck überdeckt das Zusatzgestell 9 zumindest 60 % der vom Grundgestell 7 aufgespannten Fläche. Besonders gute Resultate ergeben sich für einen Flächenanteil von mehr als 90 %.

Die erfindungsgemäße Konzeption wirkt gleichermaßen bei Aufprallereignissen mit relativ niedrigen Stoßbelastungen (Unfall mit kleiner Fahrzeuggeschwindigkeit) oder relativ hohen Stoßbelastungen (Unfall mit hoher Fahrzeuggeschwindigkeit) positiv. Im ersten Fall steht genügend Verformungsweg im Sitz zur Verfügung (je nach Auslegung bevorzugt 10-25 cm), um den Insassen wirksam vor dem sogenannten Whiplash" zu schützen. Im zweiten Fall wird der Insasse zunächst relativ sanft an das steife Grundgestell 9 herangeführt, um dann großflächig und mit reduzierter Scherbelastung in der Wirbelsäule, insbesondere im Bereich Kopf/Schulter, von der gesamten Gestellanordnung einschließlich der Kopfstütze 2 aufgefangen zu werden.

Gemäß einer besonders vorteilhaften Weiterbildung der Erfindung können für die einzelnen Energieabsorptionselemente unterschiedliche Kraft-Weg-Kennungen vorgesehen werden, um so je nach Insassengröße und/oder Insassengewicht ganz bestimmte Verlagerungs-charakteristika einstellen zu können.

In Figur 2 ist ein Ausführungsbeispiel gezeigt, bei dem beispielsweise mittels eines nur schematisch angedeuteten Stellgliedes 25 die Energieabsorptionselemente 11 und 13 über Spindeltriebe 26 und 27 verstellbar sind, damit je nach Körpergröße des Insassen die Abstände a und c optimal angepasst werden können. Die Anordnung ist hier so gewählt, daß das Stellglied 25 beispielsweise an dem Grundgestell 7 befestigt ist und die Energieabsorptionselemente 11,13 in mit Strichlinien angedeuten Schlitzführungen hin- und herbewegen können.

Figur 3 zeigt einen Fahrzeugsitz 1 mit einem Grundgestell 28, daß sowohl die Rückenlehne als auch das Gesäß des Insassen abstützt. Als Zusatzgestell ist ein Schalenkörper 29 vorgesehen, der bevorzugt als Aluminiumschaum oder Polypropylen-Partikelschaum einerseits Energieabsorptionseigenschaften besitzt und andererseits aber auch für den normalen Sitzbetrieb genügend Formstabilität gewährleistet. Diese Anordnung aus Grundgestell 28 und Zusatzgestell 29 ist ebenfalls von einer Sitzpolsterung 22' umgeben. Die Werkstoffzusammensetzung des Schalenkörpers 29 ist so gewählt, daß durch eine von der Kraft F₁ erzeugte plastische Verformung die ursprüngliche Dicke d um den Betrag x in der Weise reduziert wird, so daß sich ebenfalls eine Verlagerung der Rückenlehnenkontur gegenüber dem Grundgestell 28 ergibt. Diese Verlagerung ist mit dicken Strichlinien schematisch angedeutet.

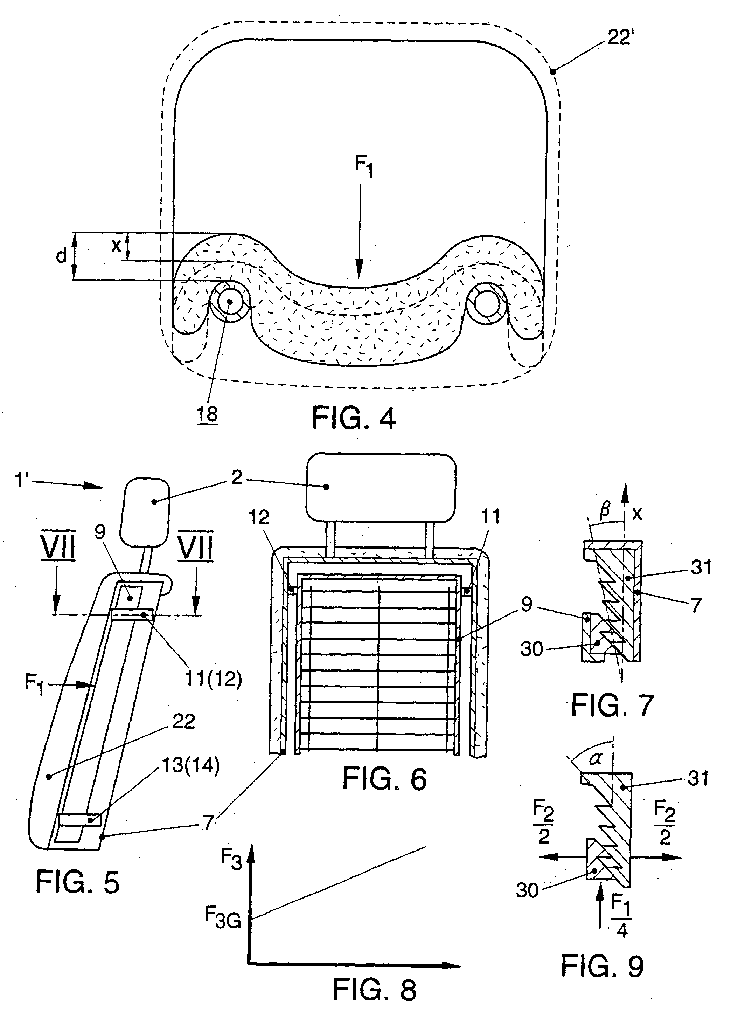

Die Figuren 5 und 6 zeigen für einen Fahrzeugsitz 1 eine Vierpunktlagerung des Zusatzgestells 9 an dem Grundgestell 7 über Energieabsorptionselemente 11 bis 14, die hier jeweils nach Art einer Rastverzahnung ausgebildet sind (siehe Figur 7). Die Rastverzahnung weist hier ein dem Zusatzgestell 9 zugeordnetes Rastprofil 30 auf, daß in ein dem Grundgestell 7 zugeordnetes Gegenrastprofil 31 hineinragt. Bei der hier gewählten Anordnung teilt sich die Kraft F₁ in erster Näherung gleichmäßig auf. An jedem der Rastelemente wirkt demzufolge die Kraft F₁/4. Durch den Verzahnungswinkel α (siehe Figur 9) an den Rastprofilen 30, 31 ergibt sich eine Kraftkomponente F₂ entsprechend der Formel F₂ = F₁ tan α. Die Kraft F₂ teilt sich dabei ebenfalls gleichmäßig auf die Rastprofile 30 und 31 auf. Die Steifigkeiten des Grundgestells 7 und des Zusatzgestells 9 wirken den Kräften F₂ bzw. F₁ bis zu einer bestimmten Grenzkraft F_{3G} entgegen. Bei Überschreitung dieser Grenzkraft bewegt sich das Zusatzgestell 9 mit dem Rastprofil 30 energieabsorbierend gegenüber dem Gegenrastprofil 31 des Grundgestells 7. Bei dem der Zeichnung dargestellten Ausführungsbeispiel ist die Sägezahnprofillinie des Gegenrastprofils 31 gegenüber dem Verschiebeweg x um den Winkel β gekippt, um so mit fortschreitender Verlagerung des Zusatzgestells 9 eine - vorzugsweise lineare - Steigerung der Reaktionskraft F₃ zu erreichen.

Die Energieabsorption im Bereich der Energieabsorptionselemente 11 bis 14 muß nicht zwangsweise durch plastische Verformung der Rastprofile 30,31 erfolgen. Vorstellbar ist auch, daß die Verzahnungen formstabil bleiben und so durch die Kraft F₁ zwischen Grundgestell 7 und Zusatzgestell 9 verkeilt werden. Diese Verkeilung sorgt dann für Deformationen an wenigstens einem der Gestelle. Diese durch plastische Verformung sich einstellenden Deformationen sind dabei konstruktiv so festgelegt, daß eine bestimmte Kraft-Weg-Kennung erhalten wird. In diesem Falle wären also die Energieabsorptionselemente integrale Bestandteile des Grundgestells 7 bzw. des Zusatzgestells 9.

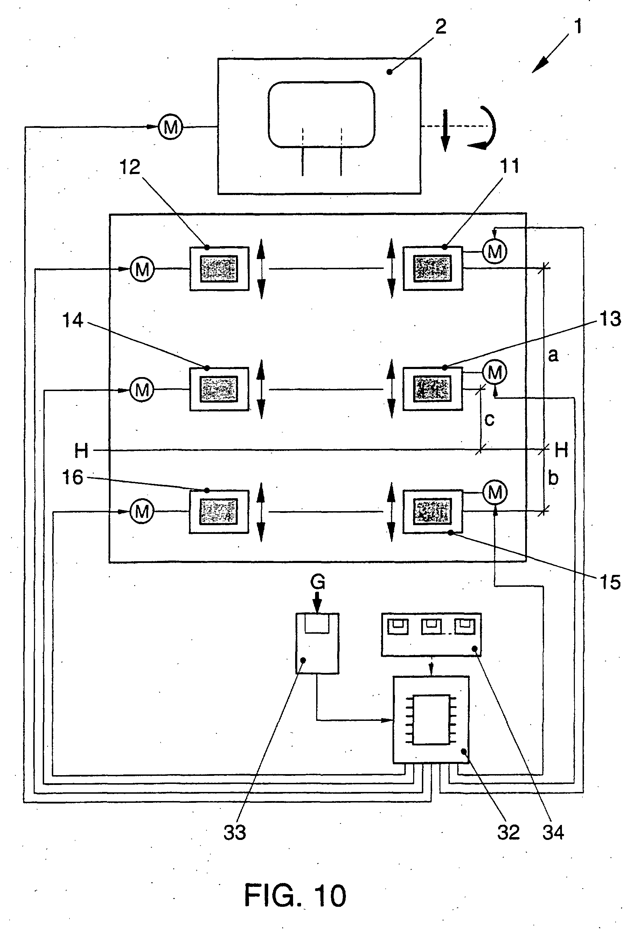

Figur 10 zeigt für den schematisch angedeuteten Fahrzeugsitz 1 mehrere mit M bezeichnete Stellglieder, welche die Kopfstütze 2 und die Energieabsorptionselemente 11 bis 16 in ihrer Lage verändern können. Zu diesem Zweck sind diese von einer Steuereinrichtung 32 beaufschlagbar, die ihrerseits beispielsweise mit einem Gewichtssensor 33 und gegebenenfalls weiteren Sensoren eines Sensorsystems 34 verbunden ist. Zu diesen Sensorsystemen können Insassenraumüberwachungssensoren, Lehnenneigungssensoren, Fahrzeugsüberschlagssensoren oder dergleichen gehören. Bei einem bevorzugten Ausführungsbeispiel ist in der Steuereinrichtung 32 ein Kennfeld in der Weise abgelegt, daß je nach durch die Sensorik erfaßter Unfallsituation und/oder nach Maßgabe des Gewichtssensors 33 eine situationsgerechte Kopfstützenverlagerung (Drehung und/oder Verschiebung) vorgenommen wird.

Wie in den Ansprüchen 22 bis 25 näher umschrieben können Kopfstützenverlagerungen aber auch ohne Hilfskraftbetätigung erzeugt werden, in dem die Insassenverlagerung gleichzeitig zur Gewinnung von Stellkräften genutzt wird. Dazu wird beispielsweise eine an dem Grundgestell 7 arretierte Kopfstützenhalterung 2a (siehe Figur 1) an ihrem unteren Ende vom eintauchenden Insassenkörper so beaufschlagt, daß sie um ein schematisch angedeutetes Gelenk 2b nach von geschwenkt wird.

## Patentansprüche

1. Fahrzeugsitz (1, 1") mit wenigstens einer zur Aufnahme einer Sitzpolsterung (22) hergerichteten Gestellanordnung, bei der ein Zusatzgestell (9, 10) gegenüber einem Grundgestell (7, 8) verlagerbar ist, und die einer Rückenlehne (3) und/oder einem Sitzteil (4) zugeordnet ist, **dadurch gekennzeichnet, dass** das Zusatzgestell (9, 10) rahmenförmig ausgebildet ist und wenigstens eine durch plastische Verformung wirksame Energieabsorptionseinrichtung umfasst, so dass sich im normalen Sitzbetrieb aufgrund der vom Insassen ausgeübten Gewichtskräfte keine spürbaren Relativbewegungen zwischen dem rahmenförmigen Zusatzgestell (9, 10) und einem rahmenförmigen Grundgestell (7, 8) ergeben und dass bei unfallbedingten Aufprallereignissen das rahmenförmige Zusatzgestell (9, 10) gegenüber einem ebenfalls rahmenförmigen ausgebildeten Grundgestell (7, 8) durch plastische Verformung der wenigstens einen Energieabsorptionseinrichtung verlagerbar ist.

2. Fahrzeugsitz nach Anspruch 1, **dadurch gekennzeichnet, dass** als Bestandteil der Energieabsorptionseinrichtung (11-20) wenigstens ein Energieabsorptionselement materialeinheitlich an dem rahmenförmigen Grundgestell (7, 8) und/oder an dem rahmenförmige Zusatzgestell (9, 10) angeformt ist.

3. Fahrzeugsitz nach Anspruch 1, **dadurch gekennzeichnet, dass** zur energieabsorbierenden Halterung des rahmenförmigen Zusatzgestells (9, 10) an dem rahmenförmigen Grundgestell (7, 8) eine Anordnung aus mehreren Energieabsorptionselementen (11 - 20) vorgesehen ist.

4. Fahrzeugsitz nach Anspruch 3, **dadurch gekennzeichnet, dass** einzelnen Energieabsorptionselementen unterschiedliche Kraft-Weg-Kennungen zugewiesen sind.

5. Fahrzeugsitz nach Anspruch 1 oder 4, **dadurch gekennzeichnet, dass** für die Energieabsorptionseinrichtung (11-20) an wenigstens einem Energieabsorptionselement die Kraft-Weg-Kennung einstellbar ist.

6. Fahrzeugsitz nach Anspruch 5, **dadurch gekennzeichnet, dass** die Kraft-Weg-Kennung insassenspezifisch einstellbar ist.

7. Fahrzeugsitz nach den Ansprüchen 5 oder 6, **dadurch gekennzeichnet, dass** die Kraft-Weg-Kennung vom Neigungswinkel der Rückenlehne abhängig einstellbar ist.

8. Fahrzeugsitz nach Anspruch 3, **dadurch gekennzeichnet, dass** die relative Lage der Energieabsorptionselemente (11-20) zueinander veränderbar ist.

9. Fahrzeugsitz nach Anspruch 1, **dadurch gekennzeichnet, dass** durch die von dem rahmenförmigen Zusatzgestell (9, 10) eingefasste Fläche zumindest 60 %, vorzugsweise wenigstens 80 % der vom Grundgestell (7, 8, 28) eingefassten Fläche abgedeckt ist.

10. Fahrzeugsitz nach Anspruch 1 mit einer höhen- und/oder neigungsverstellbaren Kopfstütze (2), **dadurch gekennzeichnet, dass** eine Steuereinrichtung (32) vorgesehen ist, durch die mittels einer Sensorik insassenspezifische Kenndaten, wie beispielsweise Körpergröße und Körpergewicht, auswertbar sind und mittels steuerbarer Stellglieder (M) einzelne Energieabsorptionselemente und/oder die Kopfstütze (2) in ihrer Position veränderbar sind.

11. Fahrzeugsitz nach Anspruch 10, **dadurch gekennzeichnet, dass** in einem Kennfeld der Steuereinrichtung (32) vorgegebenen Kopfstützeneinstellungen jeweils spezifische Anordnungen von Energieabsorptionselementen zugeordnet sind.

12. Fahrzeugsitz nach Anspruch 1, **dadurch gekennzeichnet, dass** an dem rahmenförmigen Zusatzgestell (9, 10) eine Einrichtung zur Polsterfederung befestigt ist.

13. Fahrzeugsitz nach Anspruch 1, **dadurch gekennzeichnet, dass** zur Energieabsorption wenigstens eine Ratsverzahnung vorgesehen ist, bei der ein Rastprofil (30) dem Zusatzgestell (9, 10) und ein Gegenrastprofil (31) dem Grundgestell (7, 8) zugeordnet ist.

14. Fahrzeugsitz nach Anspruch 13, **dadurch gekennzeichnet, dass** das Rastprofil (30) und das Gegenrastprofil (31) so aufeinander abgestimmt sind, dass sich mit zunehmender Verlagerung des Zusatzgestells (9, 10) gegenüber dem Grundgestell (7, 8) eine höhere Kraft-Weg-Kennung ergibt.

15. Fahrzeugsitz nach Anspruch 1 und 10 mit einer lageveränderbaren Kopfstütze (2), **dadurch gekennzeichnet, dass** aus der energieabsorbierenden Verlagerung des Zusatzgestells (9, 10) Betätigungskräfte zur Verlagerung der Kopfstütze (2) erzeugbar sind.

16. Fahrzeugsitz nach Anspruch 15, **dadurch gekennzeichnet, dass** ein Betätigungsgestänge vorgesehen ist, durch das bei einem energieabsorbierenden Eintauchen des Zusatzgestells (9, 10) in das Grundgestell (7, 8) eine Manipulation der Kopfstütze (2) in Richtung Fahrzeuginsasse bewirkbar ist.

17. Fahrzeugsitz nach Anspruch 16, **dadurch gekennzeichnet, dass** als Betätigungsgestänge ein Hebelelement vorgesehen ist, das am Grundgestell (7, 8) gelagert und mit dem Zusatzgestell (9, 10) einenends und der Kopfstütze (2) anderenends verbunden ist.

18. Fahrzeugsitz nach Anspruch 1 und 10 mit einer Kopfstütze (2), **dadurch gekennzeichnet, dass** die Kopfstütze (2) an dem Zusatzgestell (9, 10) befestigt ist.

19. Fahrzeugsitz (1') mit wenigstens einer zur Aufnahme einer Sitzpolsterung (22) hergerichteten Gestellanordnung, bei der ein Zusatzgestell (29) gegenüber einem Grundgestell (28) verlagerbar ist, und die einer Rückenlehne (3) und/oder einem Sitzteil (4) zugeordnet ist, **dadurch gekennzeichnet, dass** das Zusatzgestell (29) nach Art eines Schalenkörpers ausgebildet ist und wenigstens eine durch plastische Verformung wirksame Energieabsorptionseigenschaft aufweist, so dass sich im normalen Sitzbetrieb aufgrund der vom Insassen ausgeübten Gewichtskräfte keine spürbaren Relativbewegungen zwischen dem als Schalenkörper ausgebildeten Zusatzgestell (29) und einem rahmenförmigen Grundgestell (28) ergeben und dass bei unfallbedingten Aufprallereignissen das als Schalenkörper ausgebildete Zusatzgestell (29) gegenüber einem rahmenförmigen Grundgestell (28) durch plastische Verformung verlagerbar ist.

20. Fahrzeugsitz nach Anspruch 19, **dadurch gekennzeichnet, dass** das nach Art eines Schalenkörpers ausgebildete und wenigstens eine durch plastische Verformung wirksame Energieabsorptionseigenschaft aufweisende Zusatzgestell (29) materialeinheitlich an dem rahmenförmigen Grundgestell (28) angeformt ist.

21. Fahrzeugsitz nach Anspruch 19 und 20, **dadurch gekennzeichnet, dass** der Schalenkörper (29) auf Hartschaumbasis hergestellt ist.

22. Fahrzeugsitz nach Anspruch 21, **dadurch gekennzeichnet, dass** durch die Art des Hartschaums eine Kraft-Weg-Kennung des Schalenkörpers (29) einstellbar ist.

23. Fahrzeugsitz nach Anspruch 21, **dadurch gekennzeichnet, dass** der Hartschaum ein Partikelschaum, vorzugsweise aus Polypropylen oder Polyethylen, mit einem Raumgewicht von 50-90 Liter, ist.

24. Fahrzeugsitz nach Anspruch 21, **dadurch gekennzeichnet, dass** der Hartschaum ein Aluminiumschaum ist.

25. Fahrzeugsitz nach Anspruch 1 oder 19, **dadurch gekennzeichnet, dass** die Sitzpolsterung um das Grundgestell (9, 10, 28) und das Zusatzgestell (7, 8, 29) herumgeschäumt ist.

## Claims

1. Vehicle seat (1, 1") having at least one framework arrangement, which is set up so as to receive a seat-cushion arrangement (22) and in which an additional framework (9, 10) can be displaced relative to a basic framework (7, 8), and which is assigned to a backrest (3) and/or a seat part (4), **characterized in that** the additional framework (9, 10) is of frame-shape design and comprises at least one energy-absorption device which is effective by means of plastic deformation, so that, during the normal seat operation, the weights exerted by the occupant do not give rise to any noticeable relative movements between the frame-shaped additional framework (9, 10) and a frame-shaped basic framework (7, 8), and **in that**, in the case of impact events caused by an accident, the frame-shaped additional framework (9, 10) can be displaced in relation to a basic framework (7, 8), which is likewise of frame-shape design, by means of plastic deformation of the at least one energy-absorption device.

2. Vehicle seat according to Claim 1, **characterized in that**, as part of the energy-absorption device (11-20), at least one energy-absorption element is integrally formed, in the same material, on the frame-shaped basic framework (7, 8) and/or on the frame-shaped additional framework (9, 10).

3. Vehicle seat according to Claim 1, **characterized in that** an arrangement composed of a plurality of energy-absorption elements (11-20) is provided for the energy-absorbing mounting of the frame-shaped additional framework (9, 10) on the frame-shaped basic framework (7, 8).

4. Vehicle seat according to Claim 3, **characterized in that** different force-travel characteristics are allocated to individual energy-absorption elements.

5. Vehicle seat according to Claim 1 or 4, **characterized in that** the force-travel characteristic can be set for the energy-absorption device (11-20) on at least one energy-absorption element.

6. Vehicle seat according to Claim 5, **characterized in that** the force-travel characteristic can be set such that it is occupant-specific.

7. Vehicle seat according to Claims 5 or 6, **characterized in that** the force-travel characteristic can be set as a function of the angle of inclination of the backrest.

8. Vehicle seat according to Claim 3, **characterized in that** the relative position of the energy-absorption elements (11-20) with respect to one another can be changed.

9. Vehicle seat according to Claim 1, **characterized in that** the area which is enclosed by the frame-shaped additional framework (9, 10) covers at least 60%, preferably at least 80%, of the area which is enclosed by the basic framework (7, 8, 28).

10. Vehicle seat according to Claim 1 having a height-and/or inclination-adjustable head restraint (2), **characterized in that** a control device (32) is provided through which occupant-specific characteristic data, such as body height and body weight, can be evaluated using a sensory mechanism, and the position of individual energy-absorption elements and/or of the head restraint (2) can be changed using controllable actuators (M).

11. Vehicle seat according to Claim 10, **characterized in that** in a characteristic diagram of the control device (32) predetermined head-restraint settings are in each case assigned specific arrangements of energy-absorption elements.

12. Vehicle seat according to Claim 1, **characterized in that** a device for the cushion spring arrangement is fastened to the frame-shaped additional framework (9, 10).

13. Vehicle seat according to Claim 1, **characterized in that** at least one latching toothing, in which a latching profile (30) is assigned to the additional framework (9, 10) and a mating latching profile (31) is assigned to the basic framework (7, 8), is provided for the energy absorption.

14. Vehicle seat according to Claim 13, **characterized in that** the latching profile (30) and the mating latching profile (31) are matched to each other in such a manner that increasing displacement of the additional framework (9, 10) relative to the basic framework (7, 8) results in a higher force-travel characteristic.

15. Vehicle seat according to Claims 1 and 10 having a position-changeable head restraint (2), **characterized in that** actuating forces for displacing the head restraint (2) can be generated from the energy-absorbing displacement of the additional framework (9, 10).

16. Vehicle seat according to Claim 15, **characterized in that** an actuating linkage is provided which can be used, in the case of the additional framework (9, 10) plunging in an energy-absorbing manner into the basic framework (7, 8), to effect a manipulation of the head restraint (2) in the direction of the vehicle occupant.

17. Vehicle seat according to Claim 16, **characterized in that** a lever element which is mounted on the basic framework (7, 8) and is connected at one end to the additional framework (9, 10) and at the other end to the head restraint (2) is provided as the actuating linkage.

18. Vehicle seat according to Claims 1 and 10 having a head restraint (2), **characterized in that** the head restraint (2) is fastened to the additional framework (9, 10).

19. Vehicle seat (1') having at least one framework arrangement, which is set up so as to receive a seat-cushion arrangement (22) and in which an additional framework (29) can be displaced relative to a basic framework (28), and which is assigned to a backrest (3) and/or a seat part (4), **characterized in that** the additional framework (29) is designed in the manner of a shell body and has at least one energy-absorption property which is effective by means of plastic deformation, so that, during the normal seat operation, the weights exerted by the occupant do not give rise to any noticeable relative movements between the additional framework (29), which is designed as a shell body, and a frame-shaped basic framework (28), and **in that**, in the case of impact events caused by an accident, the additional framework (29), which is designed as a shell body, can be displaced in relation to a frame-shaped basic framework (28) by means of plastic deformation.

20. Vehicle seat according to Claim 19, **characterized in that** the additional framework (29), which is designed in the manner of a shell body and has at least one energy-absorption property which is effective by means of plastic deformation, is integrally formed, in the same material, on the frame-shaped basic framework (28).

21. Vehicle seat according to Claims 19 and 20, **characterized in that** the shell body (29) is produced taking high-resistance foam as the basis.

22. Vehicle seat according to Claim 21, **characterized in that** a force-travel characteristic of the shell body (29) can be set by the type of high-resistance foam.

23. Vehicle seat according to Claim 21, **characterized in that** the high-resistance foam is a particle foam, preferably made of polypropylene or polyethylene, with a volume weight of 50-90 litres.

24. Vehicle seat according to Claim 21, **characterized in that** the high-resistance foam is an aluminium foam.

25. Vehicle seat according to Claim 1 or 19, **characterized in that** the seat-cushion arrangement is foamed around the basic framework (9, 10, 28) and the additional framework (7, 8, 29).

## Revendications

1. Siège de véhicule (1, 1") avec au moins un agencement de bâti de siège prêt à recevoir un rembourrage de siège (22), ledit agencement de bâti comprenant un bâti annexe (9, 10) apte à être déplacé par rapport à un bâti principal (7, 8) et étant associé à un dossier (3) et/ou à une partie de siège (4), **caractérisé en ce que** le bâti annexe (9, 10) est conformé en forme de cadre et comprend au moins un dispositif absorbeur d'énergie agissant par déformation plastique de sorte qu'une sollicitation normale du siège par les forces pondérales exercées par le passager ne donne pas lieu à des mouvements relatifs notables entre le bâti annexe (9, 10) en forme de cadre et un bâti principal (7, 8) en forme de cadre et que, dans le cas de chocs provoqués par un accident, le bâti annexe (9, 10) en forme de cadre soit apte à être déplacé par rapport à un bâti principal (7, 8) également conformé en forme de cadre par déformation plastique de l'au moins un dispositif absorbeur d'énergie.

2. Siège de véhicule selon la revendication 1, **caractérisé en ce qu'**au moins un élément absorbeur d'énergie formant partie constitutive du dispositif absorbeur d'énergie (11 - 20) est venu de matière avec le bâti principal (7, 8) en forme de cadre et/ou avec le bâti annexe (9, 10) en forme de cadre.

3. Siège de véhicule selon la revendication 1, **caractérisé en ce qu'**un agencement de plusieurs éléments absorbeurs d'énergie (11 - 20) est prévu pour retenir le bâti annexe (9, 10) en forme de cadre sur le bâti principal (7, 8) en forme de cadre de manière à absorber l'énergie.

4. Siège de véhicule selon la revendication 3, **caractérisé en ce que** l'on a assigné aux différents éléments absorbeurs d'énergie des caractéristiques force/déplacement différentes.

5. Siège de véhicule selon la revendication 1 ou 4, **caractérisé en ce que**, pour le dispositif absorbeur d'énergie (11 - 20), la caractéristique force/déplacement est ajustable sur au moins un élément absorbeur d'énergie.

6. Siège de véhicule selon la revendication 5, **caractérisé en ce que** la caractéristique force/déplacement est ajustable pour chaque passager en particulier.

7. Siège de véhicule selon la revendication 5 ou 6, **caractérisé en ce que** la caractéristique force/déplacement est ajustable en fonction de l'angle d'inclinaison du dossier.

8. Siège de véhicule selon la revendication 3, **caractérisé en ce que** la position relative des éléments absorbeurs d'énergie (11 - 20) les uns par rapport aux autres peut être variée.

9. Siège de véhicule selon la revendication 1, **caractérisé en ce que** la surface délimitée par le bâti annexe (9, 10) en forme de cadre recouvre au moins 60 %, de préférence au moins 80 %, de la surface délimitée par le bâti principal (7, 8, 28).

10. Siège de véhicule selon la revendication 1 avec un appui-tête (2) réglable en hauteur et/ou en inclinaison, **caractérisé en ce qu'**il est prévu un dispositif de commande (32) permettant d'évaluer au moyen d'un système de capteurs des données caractéristiques de passagers, telles que leur taille et leur poids, et de varier au moyen d'actionneurs commandables (M) la position des différents éléments absorbeurs d'énergie et/ou de l'appui-tête (2).

11. Siège de véhicule selon la revendication 10, **caractérisé en ce que** des agencements spécifiques d'éléments absorbeurs d'énergie sont associés à des réglages d'appui-tête prédéterminés dans un diagramme de caractéristiques du dispositif de commande (32).

12. Siège de véhicule selon la revendication 1, **caractérisé en ce qu'**un dispositif de suspension du rembourrage est attaché au bâti annexe (9, 10) en forme de cadre.

13. Siège de véhicule selon la revendication 1, **caractérisé en ce qu'**il est prévu, pour absorber l'énergie, au moins une denture d'encliquetage, un profil d'encliquetage (30) étant associé au bâti annexe (9, 10) et un profil d'encliquetage conjugué (31) au bâti principal (7, 8).

14. Siège de véhicule selon la revendication 13, **caractérisé en ce que** le profil d'encliquetage (30) et le profil d'encliquetage conjugué (31) sont adaptés l'un à l'autre de manière à obtenir une caractéristique force/déplacement plus importante allant en s'accroissant au fur et à mesure du déplacement du bâti annexe (9, 10) par rapport au bâti principal (7, 8).

15. Siège de véhicule selon la revendication 1 et 10 avec un appui-tête (2) à position réglable, **caractérisé en ce que** le déplacement du bâti annexe (9, 10), par lequel l'énergie est absorbée, permet de générer des forces d'actionnement destinées à faire se déplacer l'appui-tête (2).

16. Siège de véhicule selon la revendication 15, **caractérisé en ce qu'**il est prévu une tringlerie d'actionnement permettant la manipulation de l'appui-tête (2) vers le passager du véhicule quand le bâti annexe (9, 10) s'enfonce dans le bâti principal (7, 8), absorbant ainsi l'énergie.

17. Siège de véhicule selon la revendication 16, **caractérisé en ce que** la tringlerie d'actionnement est prévue sous forme d'élément de levier monté sur le bâti principal (7, 8) et relié par une de ses extrémités au bâti annexe (9, 10) et par l'autre à l'appui-tête (2).

18. Siège de véhicule selon la revendication 1 et 10 avec un appui-tête (2), **caractérisé en ce que** l'appui-tête (2) est solidarisé au bâti annexe (9, 10).

19. Siège de véhicule (1') avec au moins un agencement de bâti de siège prêt à recevoir un rembourrage de siège (22), ledit agencement de bâti comprenant un bâti annexe (29) apte à être déplacé par rapport à un bâti principal (28) et étant associé à un dossier (3) et/ou à une partie de siège (4), **caractérisé en ce que** le bâti annexe (29) est conformé en forme de corps formant coque et possède au moins une propriété d'absorption d'énergie agissant par déformation plastique de sorte qu'une sollicitation normale du siège par les forces pondérales exercées par le passager ne donne pas lieu à des mouvements relatifs notables entre le bâti annexe (29) conformé en forme de corps formant coque et un bâti principal (28) en forme de cadre et que, dans le cas de chocs provoqués par un accident, le bâti annexe (29) conformé en forme de corps formant coque est apte à être déplacé par rapport à un bâti principal (28) en forme de cadre par déformation plastique.

20. Siège de véhicule selon la revendication 19, **caractérisé en ce que** le bâti annexe (29) conformé en forme de corps formant coque et possédant au moins une propriété d'absorption d'énergie agissant par déformation plastique est venu de matière avec le bâti principal en forme de cadre (28).

21. Siège de véhicule selon les revendications 19 et 20, **caractérisé en ce que** le corps formant coque (29) est réalisé à base de mousse dure.

22. Siège de véhicule selon la revendication 21, **caractérisé en ce qu'**une caractéristique force/déplacement du corps formant coque (29) peut être réglée en fonction du type de mousse dure.

23. Siège de véhicule selon la revendication 21, **caractérisé en ce que** la mousse dure est une mousse particulaire, de préférence en polypropylène ou en polyéthylène, ayant un volume de 50 - 90 litres.

24. Siège de véhicule selon la revendication 21, **caractérisé en ce que** la mousse dure est une mousse d'aluminium.

25. Siège de véhicule selon la revendication 1 ou 19, **caractérisé en ce que** le rembourrage de siège est expansé autour du bâti principal (9, 10, 28) et du bâti annexe (7, 8, 29).
